(19) Europäisches Patentamt
European Patent Office
Office européen des brevets

(11) EP 0 682 661 B1

(12) EUROPEAN PATENT SPECIFICATION

(45) Date of publication and mention
of the grant of the patent:
08.12.1999 Bulletin 1999/49

(21) Application number: 94907311.8

(22) Date of filing: 21.01.1994

(51) Int Cl.⁶: C07D 307/44

(86) International application number:
PCT/US94/00864

(87) International publication number:
WO 94/18187 (18.08.1994 Gazette 1994/19)

(54) **RESINOUS BINDER COMPOSITIONS**

HARZARTIGE BINDEMITTELZUBEREITUNGEN

COMPOSITIONS ADHESIVES RESINEUSES

(84) Designated Contracting States:
AT BE CH DE DK ES FR GB GR IE IT LI LU MC NL
PT SE

(30) Priority: 02.02.1993 US 12359
29.12.1993 US 176341

(43) Date of publication of application:
22.11.1995 Bulletin 1995/47

(73) Proprietor: QO CHEMICALS, INC.
West Lafayette, IN 47906 (US)

(72) Inventors:
• EVERETT, George, S.
Clarendon Hills, IL 60514 (US)
• MACLENNAN, George, R.
West Lafayette, IN 47906 (US)
• CHEN, Michael, C.
Lafayette, IN 47905 (US)

(74) Representative: Atkinson, Peter Birch et al
MARKS & CLERK,
Sussex House,
83-85 Mosley Street
Manchester M2 3LG (GB)

(56) References cited:
DE-A- 2 010 532        PL-A- 109 710
US-A- 2 343 972

Remarks:
The file contains technical information submitted
after the application was filed and not included in this
specification

## Description

This invention relates to reaction products of furfuryl alcohol and formaldehyde and more particularly to resinous furfuryl alcohol-formaldehyde reaction products having advantageous properties which admirably suit them for use as binders for composite articles.

Canadian patent No. 1,200,336 relates to resinous furan-formaldehyde condensation products which can be diluted with water in amounts up to about 50% by weight and which when cured or set are useful as binders in the manufacture of composite articles such as wood particle boards, or to form insulation batting from glass fibers, wafer board, oriented fiber board, matboard, hardboard, press-board, various fiberglass articles and the like, and in the manufacture of low density non-molded composite articles such as acoustical tile and thermal insulating mats or boards.

The invention disclosed in the Canadian patent referred to above was a significant contribution to the art in providing resinous binder compositions which can be diluted with up to 50% by weight water so as to facilitate application, such as by spray means, in manufacturing composite articles. However, resinous binder compositions which exhibit a significantly higher degree of compatibility with water are highly desired in the art of manufacturing composite materials. Furthermore, recent environmental concerns have created the need for resinous binders which are not only highly compatible with water but at the same time contain very low levels of furfuryl alcohol and formaldehyde and which emit only very low levels of volatile organic compounds (VOC) at room temperature or at elevated curing temperatures.

US-A-2 343 972 discloses a method for producing a fusible resin with a mole ratio of furfuryl alcohol to formaldehyde between 1:  ½ and 1:3 and a pH of the mixture between 1.5 and 3.5.

Accordingly, it is a principal object of the invention to provide resinous furfuryl alcohol-formaldehyde reaction products having a combination of highly desirable properties and which render the compositions highly advantageous as binders for composite articles.

It is a further object of the invention to provide liquid resinous compositions comprising the reaction product of furfuryl alcohol and formaldehyde which cure rapidly to a rigid set condition at relatively low curing temperatures and which generate very low levels of volatile organic compounds at room temperature or during heat curing.

It-is a still further object of the invention to provide resinous heat-curable compositions comprising the reaction product of furfuryl alcohol and formaldehyde which compositions can be used to replace phenolic resole and novolak resins in applications in which such resins are widely used.

It is a still further object of the invention to provide resinous heat-curable compositions comprising the reaction product of furfuryl alcohol and formaldehyde which compositions contain low levels of materials insoluble in water.

It is another object of the invention to provide resinous heat-curable compositions comprising the reaction product of furfuryl alcohol and formaldehyde having low levels of free furfuryl alcohol and formaldehyde and which cure rapidly to a set condition in aqueous environments.

It is still another object of the invention to provide resinous heat-curable compositions comprising the reaction product of furfuryl alcohol and formaldehyde which compositions are highly compatible or dilutable with water to facilitate application as a binder, such as by spraying, in the manufacture of composite articles.

Another object of the invention is to provide liquid resinous heat-curable compositions which contain low amounts of water-insoluble solids so as to minimize deleterious plugging of spray equipment used in application of the compositions as a binder for composite articles.

According to a first aspect of the present invention there is provided a process for producing a liquid resinous composition heat curable to a set condition which comprises reacting. in the presence of a weak acid having a pKa of not less than 4 and at an elevated temperature, formaldehyde with furfuryl alcohol in a molar ratio of at least 2:1 until the furfuryl alcohol content of the reaction product is reduced to not more than 5% by weight and recovering the liquid resin reaction product. A preferred embodiment is defined in claim 2.

Preferably, the molar ratio of furfuryl alcohol to formaldehyde is in the range of at least 1:2.50 to 1:3.50. The reaction is catalyzed with an organic acid and conducted at an elevated temperature, say at a temperature of about 110°C to 130°C, and preferably at a pH of at least 4, e.g. 4.00 to 4.50. The formaldehyde can be employed in various forms, such as paraformaldehyde.

Under these conditions the reaction of furfuryl alcohol and formaldehyde is conducted at a controlled rate for a period of say 4.0 to 9.0 hours. During the reaction period the reaction progress is followed by the decline in the free furfuryl alcohol content of the reaction mixture. The reaction is allowed to continue at an elevated temperature until the furfuryl alcohol content has been reduced to the desired level of not more than about 5% by weight and preferably less than 0.2% by weight of the reaction mixture. When the desired low level of free furfuryl alcohol has been achieved, the reaction mixture is cooled rapidly, such as by immersing in an ice bath, to room temperature (approximately 20°C (70°F.)) to stop the reaction. During the cooling down period and when the temperature has dropped to about 20°C (70°F). or below a sample of the product resin is taken from the reaction mixture for determination of the free formaldehyde content. A formaldehyde scavenger such as melamine or urea or the like is then added to react with the free or unreacted formaldehyde in the reaction mixture. The scavenger is added in a molar quantity sufficient to react with the free formaldehyde in the reaction mixture and is added at or below room temperature. Typically, the mixture is then stirred for 1 to 2 hours so that the reaction of the scavenger with the free formaldehyde is substantially complete. An exotherm is observed which is indicative of reaction of the scavenger with the free formaldehyde. Preferably, the formaldehyde scavenger is added in an amount to reduce the final free formaldehyde content of the reaction mixture to less than about 0.5% by weight thereof. The resulting resin can, if a non-acidic resinous binder is desired, be neutralized with a base such as ammonium hydroxide or sodium hydroxide. Generally, curing reactivity is higher when the resin is not neutralized at the end of the reaction to a pH substantially higher than 4.5.

A weak organic monomeric or polymeric carboxylic acid having a pKa of not less than about 4, such as acetic, propionic, butyric, and succinic, is used as a catalyst in an amount of about 1 to 10% by weight of the furfuryl alcohol and an alkali such as sodium hydroxide is utilized to maintain the reaction pH in the range of about 4.0 to 4.5. Propionic acid is a preferred acid catalyst.

The resinous binder compositions of this invention are characterized by exhibiting very high compatibility with water and when diluted with an excess amount of water 90% or more, preferably at least 95%, of the resin is soluble in the water. For example, when 5 grams of resin is added to 95 grams of water, at least 4.5 grams of the resin is soluble in the water. The high water compatibility of the resinous compositions is advantageous in that undesirable amounts of resin need not be discarded prior to use as a binder and greatly improved resin distribution on a composite substrate can be achieved with the resins having high water compatibility.

As used herein, the term "Water Insolubles" means the amount of residue (or solids) which settles out, after standing at least 8 hours in water, when 5.0 grams resin is added to 95.0 grams deionized water. The percentage of water insolubles can be calculated by the formula:

$$\% \text{ Water Insolubles} = \frac{\text{Weight of Residue}}{5.0 \text{ grams resin}} \times 100\%$$

As used herein the term "Water Compatibility" means the amount of resin that is soluble, after standing at least 8 hours in water, when 5.0 grams of resin is added to 95.0 grams deionized water. The percentage of water compatibility can be calculated by the formula:

$$\% \text{ Water Compatibility} = \frac{5.0 \text{ grams resin - weight of residue}}{5.0 \text{ grams resin}} \times 100\%$$

As can be seen, there is an inverse relationship between water compatibility and water insolubles - the lower the amount of water insolubles, the greater the water compatibility.

The following specific examples further illustrate the invention.

EXAMPLE 1

This example illustrates the preparation of a preferred resinous binder composition of the invention using 2.75 moles of formaldehyde per mole of furfuryl alcohol, 298 kg (656 pounds) furfuryl alcohol (3040 moles) (6.69 pound-moles), 272 kg (600 pounds) paraformaldehyde (91-93% purity; 8360 moles (18.4 pound-moles)), 1.28 kg (2.82 pounds) sodium hydroxide (50% aqueous) and 46.35 kg (102.1 pounds) propionic acid were charged to a 1325 litre (350 gallon) reactor. The reaction mixture was heated to 114-119° C. under atmospheric pressure and held 8.3 hours until the furfuryl alcohol content had been reduced to 0.64%. The product was then rapidly cooled to 27° C. and about 168 kg (371 pounds) of urea solution (50% aqueous) was added which is one equivalent based on the 13.7% by weight of the free formaldehyde as analyzed. After urea addition the mixture was mixed for one hour and then filtered through a 50 micron filter. An analysis of the product resin is given in Table 1.

EXAMPLE 2

This example illustrates the preparation of a furfuryl alcohol-formaldehyde resin according to the invention, with the resin being neutralized with ammonium hydroxide. 49 kg (108 pounds) furfuryl alcohol (500 moles (1.10 pound-moles)), 45.4 kg (100 pounds) paraformaldehyde (91-93% purity; 3.07 pound-moles) 0.5 pound sodium hydroxide (60% aqueous) and 7.67 kg (16.9 pounds) propionic acid were charged to a 1325 litre (50 gallon) reactor. The reaction mixture was then heated to 116-125° C. under slight pressure and held until the furfuryl alcohol content had been reduced to 0.65% (this took 4 hours). The product was then cooled to 85° C. and 10 kg (22 pounds) of urea solution (50% aqueous) was added which is one equivalent based on the estimated formaldehyde content. This was mixed for one hour, cooled to 30° C. and 19 kg (42 pounds) of ammonium hydroxide solution (28% aqueous) was added to neutralize to pH of 7.2. An analysis of the resin is given in Table 1.

EXAMPLE 3

This example illustrates the present invention wherein a 3.5 mole ratio of formaldehyde to furfuryl alcohol was utilized. 686.6 grams furfuryl alcohol (7.0 moles), 800.5 grams paraformaldehyde (91-93% purity; 24.5 moles), 3 grams sodium hydroxide pellets and 109 grams propionic acid were charged to a 3 liter flask. The reaction mixture was then heated, with stirring, to 116° C. and held until the furfuryl alcohol had been reduced to 0.5%. The product was then rapidly cooled to room temperature (22° C.). An analysis of this resin is given in Table 1.

EXAMPLE 4

This example illustrates the preparation of a furfuryl alcohol-formaldehyde resin following the techniques in the prior art, such as in Canadian Patent No. 1,200,336. In this example a high molecular ratio of formaldehyde to furfuryl alcohol according to the present invention was not employed. 991.6 grams furfuryl alcohol (10.1 moles), 412.5 grams paraformaldehyde (91-93% purity; 12.0 moles), 40.1 grams glacial acetic acid and 144.1 grams water were charged to a 3 liter flask. The reaction mixture was then heated, with stirring, to reflux (100° C.) and held for approximately four hours until the viscosity reached 60 centipoise at 25° C. as measured by Brookfield viscometer.
The product, at this point, was split into two portions. One portion (506.4 grams) resin at 60 centipoise viscosity was vacuum stripped up to a temperature of 140° C. at $8 \times 10^3$ Pa (60 millimeters of mercury) vacuum. 345.9 grams product was obtained. An analysis of the product is given in Table 1.

EXAMPLE 5

The 60 centipoise viscosity intermediate (second portion)from Example 4 was also advanced to lower the furfuryl alcohol content by reacting further rather than vacuum stripping. Thus, 136.4 grams resin at 60 centipoise viscosity was refluxed an additional two hours (100° C.) to give 131.2 grams product. Analysis of this product is given in Table 1.

## Table 1

| | Resin Example 1 | Resin Example 2 | Resin Example 3 | Resin Example 4 | Resin Example 5 |
|---|---|---|---|---|---|
| Mole Ratio[*] | 2.75:1 | 2.75:1 | 3.5:1 | 1.25:1 | 1.25:1 |
| $NH_4OH$ Neutralized | No | Yes | No | No | No |
| Water %[**] | 20.2 | 27.3 | 6.0 | 0.1 | 8.1 |
| Furfuryl Alcohol % | 0.35 | 0.28 | 0.5 | 8.9 | 8.2 |
| Formaldehyde % | 2.8 | 0.0 | 20.0 | 17.4 | 8.1 |
| Water Compatibility % | 98.4 | 99.9 | 100.0 | 58.7 | 46.3 |
| Water Insolubles % | 1.6 | 0.1 | 0.0 | 41.3 | 53.7 |
| Viscosity, cps, 25°C | 435 | 275 | -- | 6800 | 885 |
| pH | 4.0 | 6.3 | 3.5 | 3.1 | -- |

[*]   Mole Ratio of Formaldehyde to Furfuryl Alcohol

[**]   Percentage of water inherently present in the resin.

EP 0 682 661 B1

Resin compositions of the invention have been tested for their curing reactivity by Dynamic Mechanical Analysis (DMA).

In Dynamic Mechanical Analysis a viscoelastic material is stressed and then released. This results in a mechanical oscillation at a resident frequency characteristic of the material being tested. Some of this energy is dissipated (lost to heat) or damped and the amplitude of oscillation decreases. In the Dynamic Mechanical Analysis an amount of energy, equal to that dissipated, is added to each cycle to maintain constant amplitude. The make-up energy is a direct measure of sample damping. As a sample is heated through a temperature program, this damping is affected by the cure. The damping is constant up to when the curing starts. As the resin cures, the damping changes up to the point when curing is completed when it becomes constant again. Therefore, the Dynamic Mechanical Analysis gives the temperature where the cure starts and the temperature where cure is completed.

The results of testing by Dynamic Mechanical Analysis are shown in Table 2.

Table 2

| | Resin of Example 1 | Resin of Example 2 | Resin of Example 5 | Low VOC Phenolic |
|---|---|---|---|---|
| Reactivity (DMA) (Cure; °C. start/ °C. finish) | 100°C./140°C. | 140°C./190°C. | 95°C./145°C. | |
| VOC emissions | | | | |
| Furfuryl Alcohol | 500 ppm | 3100 ppm | 5000 ppm | -- |
| Formaldehyde | 800 ppm | 0.0 ppm | 500 ppm | 3500 ppm |
| Bis-hydroxymethyl furan | 0.0 ppm | 27000 ppm | 0.0 ppm | -- |
| Phenol | | | | 2500 ppm |
| Others | | | | 600 ppm |

The resin binder compositions of this invention can be diluted with water and applied in accordance with known manufacturing procedures and the substrate having the binder applied thereto subjected to heat so as to cure the binder into a rigid thermoset condition. Generally temperatures on the order of 121 to 232°C (250 to 450° F). are sufficient to cure the resinous binders. Curing catalyst such as those described in a paper by Goldstein and Dreher, "Stable Furfuryl Alcohol Impregnating solutions", Ind. Eng. Chem., Vol.. 52, No. 1, Jan. 1960, p. 58 and the like can be utilized to accelerate curing of the binder as is known in the art. Examples of such catalysts are cadmium nitrate, cobalt nitrate, nickel nitrate, zinc nitrate, ammonium nitrate, ammonium chloride, aluminum sulfate, copper sulfate, ammonium sulfate, malic acid, citric acid, tartaric acid, malonic acid, maleic acid, oxalic acid, chloroacetic acid and salicylic acid.

Even strong acids such as toluenesulfonic acid, benzenesulfonic acid, dichloroacteic acid, trichloroacetic acid, phosphoric acid, etc. can be used to cure these resinous binders in systems that are not heat cured.

## Claims

1. A process for producing a liquid resinous composition heat curable to a set condition which comprises reacting, in the presence of a weak acid having a pKa of not less than 4 and at an elevated temperature, formaldehyde with furfuryl alcohol in a molar ratio of at least 2:1 until the furfuryl alcohol content of the reaction product is reduced to not more than 5% by weight and recovering the liquid resin reaction product.

2. A process according to claim 1 consisting essentially of mixing together formaldehyde and furfuryl alcohol, adjusting the initial pH of the mixture to at least 4.0, reacting the mixed formaldehyde and furfuryl alcohol at elevated temperature in the presence of the weak organic acid for a time sufficient to reduce the furfuryl alcohol content of the reaction product to not more than 5% by weight and recovering a liquid resinous composition containing low amounts of volatile organic compounds and not more than 10% by weight of water-insoluble material which settle out when 5.0 grams of composition are added to 95.0 grams of deionised water and the composition stands for at least eight hours.

3. A process according to claim 1 or 2 wherein the molar ratio of formaldehyde to furfuryl alcohol is at least 2.75:1.

4. A process according to claim 3 wherein the molar ratio of formaldehyde to furfuryl alcohol is at least 3.50:1.

5. A process according to any one of claims 1 to 4 wherein prior to recovery of the reaction product, a formaldehyde scavenger is introduced into the reaction mixture to react with free formaldehyde.

6. A process according to claim 5 wherein the formaldehyde scavenger is urea.

7. A process according to any one of claims 1 to 6 wherein prior to recovery of the reaction product a base is introduced into the reaction mixture to achieve recovery of resin of substantially neutral pH.

8. A process in accordance with claim 7 wherein the base is ammonium hydroxide.

9. A process according to any one of claims 1 to 8 wherein the reaction is conducted for a time sufficient to reduce the furfuryl alcohol content of the reaction product to not more than 0.2% by weight.

10. A process as claimed in any one of claims 1 to 9 wherein the organic acid is selected from the group consisting of acetic, propionic, butyric and succinic acids.

11. A liquid resinous composition heat curable to a rigid set condition comprising the reaction product of formaldehyde and furfuryl alcohol in a molar ratio of at least 2:1 in the presence of a weak organic acid having a pKa of at least 4, the composition containing not more than 5% by weight of furfuryl alcohol and not more than 10% by weight of water insoluble material which settles out when 5.0 grams of composition are added to 95.0 grams of deionised water and the composition stands for at least eight hours.

12. The composition of claim 11 which contains less than 0.5% by weight of formaldehyde.

13. The composition of claim 11 in which the organic acid is selected from the group consisting of acetic, propionic, butyric and succinic acids.

EP 0 682 661 B1

**Patentansprüche**

1. Verfahren für die Herstellung einer bis zum ausgehärteten Zustand warmhärtbaren flüssigen Harzzusammensetzung, das folgendes umfaßt: Reagieren, in Gegenwart einer schwachen Säure mit einem $pK_a$-Wert von nicht weniger als 4 und bei erhöhter Temperatur, von Formaldehyd mit Furfurylalkohol in einem Molverhältnis von mindestens 2:1, bis der Furfurylalkoholgehalt des Reaktionsprodukts auf nicht mehr als 5 Gew.- % reduziert ist, und Gewinnen des flüssigen Harzreaktionsprodukts.

2. Verfahren nach Anspruch 1, das im wesentlichen aus folgendem besteht: Mischen von Formaldehyd und Furfurylalkohol, Einstellen des anfänglichen pH-Werts der Mischung auf mindestens 4,0, Reagieren des gemischten Formaldehyds und Furfurylalkohols bei erhöhter Temperatur in Gegenwart der schwachen organischen Säure über eine Zeitspanne, die ausreicht, um den Furfurylalkoholgehalt des Reaktionsprodukts auf nicht mehr als 5 Gew.-% zu reduzieren, und Gewinnen einer flüssigen Harzzusammensetzung, die geringe Mengen an flüchtigen organischen Verbindungen und nicht mehr als 10 Gew.-% wasserunlösliches Material enthält, das sich absetzt, wenn 5,0g der Zusammensetzung 95,0g entionisiertem Wasser zugesetzt werden und die Zusammensetzung mindestens 8 Stunden steht.

3. Verfahren nach Anspruch 1 oder 2, wobei das Molverhältnis von Formaldehyd zu Furfurylalkohol mindestens 2,75: 1 beträgt.

4. Verfahren nach Anspruch 3, wobei das Molverhältnis von Formaldehyd zu Furfurylalkohol mindestens 3,50: 1 beträgt.

5. Verfahren nach einem der Ansprüche 1 bis 4, wobei vor der Gewinnung des Reaktionsprodukts ein Formaldehydfänger zum Reagieren mit freiem Formaldehyd in die Reaktionsmischung eingeführt wird.

6. Verfahren nach Anspruch 5, wobei es sich bei dem Formaldehydfänger um Harnstoff handelt.

7. Verfahren nach einem der Ansprüche 1 bis 6, wobei vor der Gewinnung des Reaktionsprodukts eine Base in die Reaktionsmischung eingeführt wird, um die Gewinnung eines Harzes von im wesentlichen neutralem pH-Wert herbeizuführen.

8. Verfahren nach Anspruch 7, wobei es sich bei der Base um Ammoniumhydroxid handelt.

9. Verfahren nach einem der Ansprüche 1 bis 8, wobei die Redaktion über eine Zeitspanne durchgeführt wird, die ausreicht, um den Gehalt an Furfurylalkohol des Reaktionsprodukts auf nicht mehr als 0,2 Gew.-% zu reduzieren.

10. Verfahren nach einem der Ansprüche 1 bis 9, wobei die organische Säure aus der Gruppe ausgewählt wird, die aus Essig-, Propion-, Butter- und Bernsteinsäure besteht.

11. Bis zum ausgehärteten Zustand warmhärtbare flüssige Harzzusammensetzung, die folgendes umfaßt: das Produkt der Reaktion von Formaldehyd und Furfurylalkohol in einem Molverhältnis von mindestens 2:1 in Gegenwart einer schwachen organischen Säure mit einem pKa-Wert von nicht weniger als 4, wobei die Zusammensetzung nicht mehr als 5 Gew.-% Furfurylalkohol und nicht mehr als 10 Gew.-% wasserunlösliches Material enthält, das sich absetzt, wenn 5,0g der Zusammensetzung 95,0g entionisiertem Wasser zugesetzt werden und die Zusammensetzung mindestens 8 Stunden steht.

12. Zusammensetzung nach Anspruch 11, die weniger als 0,5 Gew.-% Formaldehyd enthält.

13. Zusammensetzung nach Anspruch 11, in der die organische Säure aus der Gruppe ausgewählt wird, die aus Essig-, Propion-, Butter- und Bernsteinsäure besteht.

**Revendications**

1. Procédé pour préparer une composition résineuse liquide thermodurcissable pour atteindre un état dans lequel la composition a pris, qui comprend la mise en réaction, en présence d'un acide faible possédant une valeur pKa qui n'est pas inférieure à 4 et à une température élevée, de formaldéhyde avec de l'alcool furfurylique dans un rapport molaire d'au moins 2:1 jusqu'à ce que l'on obtienne une réduction de la teneur du produit réactionnel en alcool furfurylique pour atteindre une valeur qui n'est pas supérieure à 5% en poids, et la récupération du produit réactionnel de résine liquide.

2. Procédé selon la revendication 1, consistant essentiellement à mélanger l'un avec l'autre du formaldéhyde et de l'alcool furfurylique, à régler le pH initial du mélange à une valeur d'au moins 4,0, à faire réagir le mélange de formaldéhyde et d'alcool furfurylique à une température élevée en présence de l'acide organique faible pendant un laps de temps suffisant pour réduire la teneur du produit réactionnel en alcool furfurylique jusqu'à une valeur qui n'est pas supérieure à 5% en poids et à récupérer une composition résineuse liquide possédant de faibles teneurs en composés organiques volatils et possédant une teneur en produits insolubles dans l'eau qui n'est pas supérieure à 10% en poids, lesdits produits se séparant par précipitation lorsqu'on ajoute 5,0 g de la composition à 95,0 g d'eau déminéralisée et lorsqu'on laisse la composition au repos pendant un laps de temps d'au moins 8 heures.

3. Procédé selon la revendication 1 ou 2, dans lequel le rapport molaire du formaldéhyde à l'alcool furfurylique s'élève à au moins 2,75:1.

4. Procédé selon la revendication 3, dans lequel le rapport molaire du formaldéhyde à l'alcool furfurylique s'élève à au moins 3,50:1.

5. Procédé selon l'une quelconque des revendications 1 à 4, dans lequel, avant de récupérer le produit réactionnel, on introduit un fixateur du formaldéhyde dans le mélange réactionnel pour le faire réagir avec le formaldéhyde libre.

6. Procédé selon la revendication 5, dans lequel le fixateur du formaldéhyde est l'urée.

7. Procédé selon l'une quelconque des revendications 1 à 6, dans lequel, avant de récupérer le produit réactionnel, on introduit une base dans le mélange réactionnel pour obtenir la récupération d'une résine possédant un pH essentiellement neutre.

8. Procédé selon la revendication 7, dans lequel la base est l'hydroxyde d'ammonium.

9. Procédé selon l'une quelconque des revendications 1 à 8, dans lequel on effectue la réaction pendant un laps de temps suffisant pour réduire la teneur du produit réactionnel en alcool furfurylique jusqu'à une valeur qui n'est pas supérieure à 0,2% en poids.

10. Procédé selon l'une quelconque des revendications 1 à 9, dans lequel l'acide organique est choisi parmi le groupe constitué par l'acide acétique, l'acide propionique, l'acide butyrique et l'acide succinique.

11. Composition résineuse liquide thermodurcissable pour atteindre un état dans lequel la composition est rigide suite à la prise, comprenant le produit réactionnel de formaldéhyde et d'alcool furfurylique dans un rapport molaire d'au moins 2:1 en présence d'un acide organique faible dont la valeur pKa s'élève à au moins 4, la composition possédant une teneur en l'alcool furfurylique qui n'est pas supérieure à 5% en poids et une teneur en produits insolubles dans l'eau qui n'est pas supérieure à 10% en poids, lesdits produits se séparant par précipitation lorsqu'on ajoute 5,0 g de la composition à 95,0 g d'eau déminéralisée et lorsqu'on laisse la composition au repos pendant un laps de temps d'au moins 8 heures.

12. Composition selon la revendication 11, qui contient du formaldéhyde à concurrence de moins de 0,5% en poids.

13. Composition selon la revendication 11, dans laquelle l'acide organique est choisi parmi le groupe constitué par l'acide acétique, l'acide propionique, l'acide butyrique et l'acide succinique.